# EUROPÄISCHE PATENTSCHRIFT

(11) **EP 0 761 794 B1**
(45) Veröffentlichungstag und Bekanntmachung des Hinweises auf die Patenterteilung: **20.06.2001**
(21) Anmeldenummer: 96113170.3
(22) Anmeldetag: 16.08.1996
(51) Int. Cl.: C09J 7/02, G11B 5/627, G11B 5/73

(54) **Heisssiegelfolie**
Heat-sealing film
Feuille thermosoudable

(30) Priorität: 25.08.1995 DE 19531313
(43) Veröffentlichungstag der Anmeldung: 12.03.1997
(73) Patentinhaber: EMTEC Magnetics GmbH, 67059 Ludwigshafen (DE)
(72) Erfinder: Kohl, Albert, 67229 Laumersheim (DE); Römer, Karl Heinz, 67227 Frankenthal (DE); Latzel, Werner, Dr., 77704 Oberkirch (DE); Heilmann, Peter, Dr., 67098 Bad Dürkheim (DE); Hitzfeld, Michael, Dr., 76185 Karlsruhe (DE)

(56) Entgegenhaltungen:
- EP-A- 0 315 072
- EP-A- 0 405 309
- EP-A- 0 429 269

## Beschreibung

Die Erfindung betrifft eine Heißsiegelfolie, enthaltend einen flexiblen Schichtträger und eine heißsiegelbare Überzugsschicht aus organischen Polymeren sowie ein heißsiegelbares Transfermagnetband und einen daraus hergestellten magnetischen Aufzeichnungsträger.

Heißsiegelfolien dieser gattungsmäßigen Art sind für die verschiedensten Anwendungen bereits bekannt.

Eine Ausführungsform sind Thermotransferfolien, die zwischen dem flexiblen Schichtträger und der heißsiegelbaren Überzugsschicht eine oder mehrere Übertragungsschichten enthalten. Diese können beispielsweise zum Zwecke der Beschriftung oder Verschönerung von Festkörperoberflächen Farbpigmente feinverteilt in einer organischen Bindemittelmatrix enthalten. Auch können die feinverteilten Pigmentteilchen magnetisierbar sein, beispielsweise bei Transfermagnetbändern, die zur Herstellung von Magnetkarten verwendet werden. Dabei werden die gattungsmäßigen Folien nach dem bekannten Heißsiegelverfahren bei erhöhter Temperatur und unter Druck auf ein geeignetes Substrat aufgepreßt, welches starr oder auch flexibel sein kann.

Beim Heißsiegeln schmilzt bekanntermaßen die heißsiegelbare, thermoplastische Überzugsschicht und bildet eine Klebefuge zwischen dem Substrat und der Trägerfolie. Im Falle der Thermotransferfolien ist die Haftfestigkeit der Klebefuge zwischen dem Substrat und der Übertragungsschicht nach dem Heißsiegeln größer als die Klebekraft zwischen Übertragungsschicht und der Trägerfolie. Somit kann die Trägerfolie unmittelbar nach dem Verkleben von der Übertragungsschicht mechanisch abgelöst werden.

In modernen Heißsiegelanlagen werden rollenförmig aufgewickelte Heißsiegelfolien verwendet. Die Rollen müssen faltenfrei abgerollt und gleichmäßig in den Heißsiegelbereich transportiert werden, wo die Übertragung möglichst schnell erfolgen soll. Daher muß die heißsiegelbare Überzugsschicht so beschaffen sein, daß diese einerseits bei der Abwickel- und Transporttemperatur nicht klebefähig ist und insbesondere nicht blockt, das heißt nicht an der Rückseite der Heißsiegelfolie oder auf der Oberfläche der verwendeten Transporteinrichtung haftet. Andererseits soll die heißsiegelbare Schicht während der kurzen Verweildauer im Übertragungsbereich schnell plastifizieren und mit dem Substrat verkleben.

Eine bekannte, einfache Lösung für diese Aufgabe besteht darin, die Oberfläche der heißsiegelbaren Schicht mit einer Trennlage aus nichthaftender Folie oder Papier zu kaschieren, welche erst unmittelbar vor dem Heißsiegeln von der Überzugsschicht entfernt wird. Geeignet für diese Anwendung als Trennlage sind beispielsweise Papierfolien, die mit einem Antiadhäsionsmittel, zum Beispiel Silikonöl, getränkt sind. Nachteilig ist, daß die Trennlage entsorgt werden muß, wobei zusätzliche Kosten für Aufwicklung und Entsorgung anfallen. Außerdem wird beim mechanischen Ablösen der Trennlage stets ein Teil der heißsiegelbaren Überzugsschicht mit entfernt, wobei eine Klebefuge entsteht, deren Dicke von Ort zu Ort variiert und wobei die Klebekraft nach dem Heißsiegelvorgang entsprechend der Klebefugendicke schwankt.

Einen alternativen Lösungsansatz enthält das Gebrauchsmuster G 93 14 818. Darin wird eine Heißsiegelfolie mit einer heißsiegelbaren Überzugsschicht beschrieben, die aus einer zweikomponentigen Schicht aus organischen Polymeren gebildet wird, wobei die eine Komponente aus einem Polyacrylat-Kleber besteht und die zweite Komponente aus nichtklebendem, erst oberhalb von 100 °C erweichendem, Polystyrol. Gemäß dieser Veröffentlichung ist die resultierende Heißsiegelfolie bei Temperaturen unterhalb von 80 °C nichtblockend und wird erst klebefähig oberhalb von 100 °C.

Auch diese technische Lehre hat den Nachteil, daß die Dicke der Klebefuge beim Heißsiegelprozeß nicht kontrollierbar ist. Einerseits ist dies dadurch bedingt, daß die Klebeschicht teilweise am Rand der Heißsiegelfolie durch Temperatur und Druck herausgepreßt wird. Andererseits dringt die flüssige Klebstoffkomponente besonders bei saugfähigen Substraten teilweise in diese ein, so daß die Verwendung von faserförmigen oder porösen Substraten zu einer allzu geringen, örtlich veränderlichen Klebekraft führt.

In einem weiteren Gebrauchsmuster G 94 14 596 werden Heißsiegelfolien mit einer Trägerfolie und einer heißsiegelbaren Überzugsschicht beschrieben, wobei die Überzugsschicht aus mindestens einer thermoplastischen Klebeschicht mit einer Erweichungstemperatur von 40 bis 150 °C besteht und vorteilhafterweise auch inerte Füllstoffe enthalten kann. In einer weiteren vorteilhaften Ausgestaltung kann die Überzugsschicht auch aus zwei übereinanderliegenden Klebeschichten bestehen, wobei die der Trägerfolie anliegende Klebeschicht eine höhere Glasübergangstemperatur Tg hat als die zweite, darüberliegende Schicht.

Auch dieser Veröffentlichung haften die bereits geschilderten Nachteile an. Die inerten Füllstoffe können, falls sie nicht aus der heißsiegelbaren Schicht hervorstehen, die Klebeneigung, das heißt das Blocken der Folie beim Abrollen oder Transport, nicht verhindern. Ebensowenig kann beim Heißsiegelvorgang die Dicke der Klebefuge beherrscht werden, insbesondere nicht bei harten inkompressiblen Füllstoffen von ungleichmäßiger Größe. Im Fall der zwei übereinanderliegenden Schichten besteht zusätzlich das Risiko, daß die Klebeneigung der oberen weichen, thermoplastischen Schicht zum Blocken der Folie vor dem Heißsiegelvorgang führt.

Der vorliegenden Erfindung liegt daher die Aufgabe zugrunde, eine Heißsiegelfolie zu schaffen, die einerseits in einem großen Temperaturbereich nichtblockend ist, von einer aufgewickelten Rolle stets problemlos abwickelbar ist sowie auf schnell laufenden Heißsiegelanlagen transportierfähig ist, und die andererseits beim Heißsiegelvorgang eine gleichmäßige Klebefuge gewährleistet. Die heißsiegelbare Überzugsschicht soll dabei schnellschmelzend sein und dennoch von saugfähigen Substratmaterialien wie Papier, Vliesstoffen oder ähnlichen nicht aufgesogen werden. Auch soll bei der Verwendung von nichtsaugenden Substraten die heißsiegelbare, flüssige Klebeschicht nicht seitlich aus der Heißsiegelfolienbahn herausgepreßt werden.

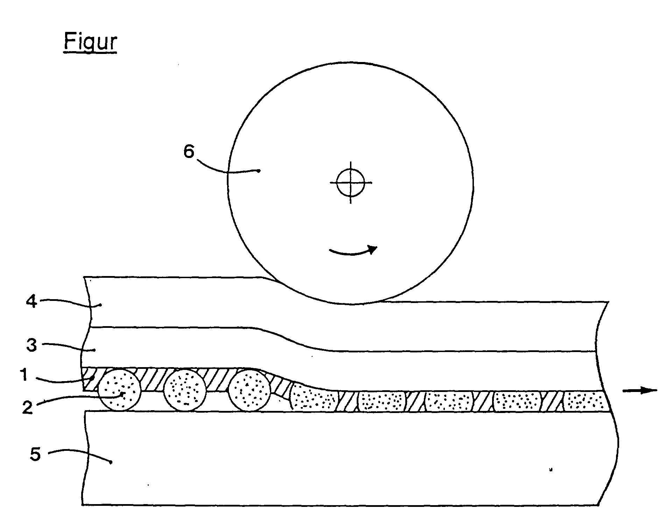

Diese Aufgabe wird erfindungsgemäß gelöst durch die kennzeichnenden Merkmale des Patentanspruchs 1. Weitere Einzelheiten sind den Ansprüchen 2 bis 17, der Zusammenfassung, der Beschreibung und der Figur zu entnehmen.

Nunmehr wird der Erfindungsgegenstand anhand der Figur näher erläutert. Diese zeigt eine Heißsiegelfolie (1, 2, 3, 4) beim Heißsiegeln auf ein geeignetes Substrat (5), welches grundsätzlich aus starrem oder flexiblem Kunststoff, Papier, Vlies oder dergleichen bestehen kann. Erfindungswesentlich ist, daß die kalottenförmig aus der Überzugsschicht (1) hervorstehenden Polymerkugeln (2) der amorphen Schichtkomponente mit der niedrigsten Erweichungstemperatur bei niederen Temperaturen eine geringe Schichtrauhigkeit der Überzugsschicht (1, 2) bewirken mit der Folge, daß die Heißsiegelfolie (1, 2, 3, 4) gleitfähig wird und sich faltenfrei von einer Wickelrolle abwickeln läßt. Erst oberhalb ihrer Erweichungstemperatur und unter der Einwirkung des Andrucks einer geheizten Preßwalze (6) oder eines Stempels in der Heißsiegelzone plastifizieren die Polymerkügelchen (2). Sie werden dabei auf das Substrat (5) aufgepreßt und bis zur Dicke der bereits flüssigen, übrigen Bindemittelkomponenten (1) komprimiert.

Die Erfindung liefert eine Heißsiegelfolie (1, 2, 3, 4), welche bei einer Folientemperatur heißsiegelbar ist, die höher ist als die Erweichungstemperatur der kugelförmigen Bindemittelkomponente (2). Bei Folientemperaturen, die geringer sind als diese Erweichungstemperatur, sind die Heißsiegelfolien (1, 2, 3, 4) problemlos wickelbar und nichtblockend.

Die genaue chemische Zusammensetzung der Komponenten (1, 2) in der heißsiegelbaren Schicht ist nicht erfindungswesentlich. Es kommt vielmehr entscheidend auf den Temperaturverlauf der elastischen Eigenschaften der kugelförmigen Komponente (2) und auf die relative Lage der Schmelztemperaturen der Bindemittelkomponenten (1, 2) an.

Typische Temperaturkennlinien des Elastizitätsmoduls von amorphen und teilkristallinen Polymeren sind zum Beispiel gezeigt in "Chemie und Physik der Polymeren" (Jan M. G. Cowie, Verlag Chemie, 1976, Seite 297). Bei niedrigen Temperaturen unterhalb der T_{g} sind thermoplastische Polymere glasartig starr mit einem E-Modul von ungefähr 10⁹ - 10¹⁰ Pa. Bei Erreichen der Glasübergangstemperatur nimmt der Wert des E-Moduls innerhalb eines Temperaturintervalls von ungefähr 20 °C bis maximal 40 °C signifikant ab.

Im Falle der amorphen Polymere ist das Verhältnis der E-Moduli unterhalb und oberhalb T_{g} besonders groß, zum Beispiel für amorphes Standard-Polystyrol ungefähr 10⁴ Pa. Im Bereich höherer Temperaturen folgt ein kautschuk-elastisches Plateau, in welchem das Material plastisch verformbar ist. Schließlich erfolgt ein allmählicher Übergang in den schmelzflüssigen Zustand, welcher bei amorphem Polystyrol erst ab ungefähr 180 °C erfolgt. Amorphe Polymere erweichen somit hauptsächlich im Glasübergangsbereich von ungefähr T_{g} - 20 °C bis T_{g} + 20 °C. Oberhalb von T_{g} + 20 °C sind sie plastisch verformbar in einem weiten, kautschuk-elastischen Bereich.

Dagegen ist im Falle der thermoplastischen Polymere mit hoher Kristallinität die E-Modulstufe deutlich schwächer ausgeprägt, wobei die Größe des E-Moduls unterhalb und oberhalb T_{g} dem Kristallinitätsgrad näherungsweise proportional ist. Oberhalb von T_{g} wird eine genau definierte Schmelztemperatur Tₘ beobachtet, bei welcher die Kristallite schmelzen und der E-Modul auf Null sinkt. Die Größe des entsprechenden Schmelz- und Erweichungstemperaturbereichs ist bei Polymeren mit hoher Kristallinität besonders klein, zum Beispiel im Falle von kristallinem Polystyrol ungefähr 20 °C.

Erfindungsgemäß werden die Bindemittelkomponenten (1, 2) so gewählt, daß die kugelförmige Komponente (2) amorph ist mit einer T_{g}, welche mindestens 5°C bis maximal 100 °C, vorzugsweise um 10 °C bis 30 °C geringer ist als die Schmelztemperatur Tₘ der übrigen Bindemittelkomponenten (1) mit hoher Kristallinität und wobei Tₘ innerhalb des kautschuk-elastischen Plateaus der amorphen Komponente (2) liegt.

Vorteilhaft ist es, wenn alle Bindemittelkomponenten einen möglichst engen Erweichungstemperaturbereich besitzen. Dies ist bei den erfindungsgemäßen thermoplastischen Bindemittelkomponenten der Fall. In der konkreten Ausführung des erfindungsgemäßen Beispiels beträgt der jeweilige Erweichungsbereich der Bindemittelkomponenten in der heißsiegelbaren Überzugsschicht (1, 2) 20 bis maximal 40 °C.

Zur Erfindung gehört weiterhin ein Transfermagnetband, bestehend aus einem an sich bekannten flexiblen Schichtträger (4), zum Beispiel aus Polyethylenterephthalat, mit mindestens einer von diesem ablösbaren magnetisierbaren Aufzeichnungsschicht (3) bekannter Zusammensetzung und einer erfindungsgemäßen heißsiegelbaren Überzugsschicht (1, 2). Gegebenenfalls kann zwischen dem flexiblen Schichtträger (4) und der magnetisierbaren Aufzeichnungsschicht (3) eine an sich bekannte (nicht dargestellte) Trennschicht angeordnet sein, zum Beispiel eine polymere Haftschicht mit einer Erweichungstemperatur, welche geringer ist als die Erweichungstemperatur von allen Bindemittelkomponenten in der erfindungsgemäßen heißsiegelbaren Überzugsschicht. Anstelle einer Haftschicht kann auch eine verschleißfeste Schicht aus harten, anorganischen Teilchen angebracht sein, die bei dem späteren bevorzugten Einsatz des heißgesiegelten Transfermagnetbandes dem Endprodukt Magnetkarte oder dergleichen eine größere Verschleißfestigkeit verleiht.

Gleichfalls zur Erfindung gehörig ist ein magnetischer Aufzeichnungsträger, zum Beispiel eine Magnetkarte oder Magnetfolie, mit einem nichtmagnetisierbaren Substrat (5), vorzugsweise aus Papier oder Kunststoffen, zum Beispiel Polyvinylchlorid oder Polypropylen. Dieses wird auf bekannte Art aus dem erfindungsgemäßen Transfermagnetband hergestellt durch Heißsiegeln und Übertragung der magnetisierbaren Übertragungsschicht (3) auf das Substrat (5), siehe Figur. Nach Fertigstellung befindet sich die erfindungsgemäße heißsiegelbare Überzugsschicht (1, 2) so zwischen dem Substrat (5) und der Übertragungsschicht (3), daß eine kaltfeste Klebefuge mit hoher Haftfestigkeit und mit einheitlicher Dicke entsteht. Die ursprünglich kugelförmige Bindemittelkomponente (2) befindet sich dabei im komprimierten Zustand säulenförmig zwischen Substrat und Übertragungsschicht, die Zwischenräume werden durch die übrigen Bindemittelkomponenten (1) aufgefüllt.

Weitere zweckmäßige Ausführungsformen der Erfindung enthalten die Unteransprüche. Demnach ist es möglich, beispielsweise leitfähige Pigmentteilchen oder Farbpigmente in die heißsiegelbare Überzugsschicht zu geben, um optische Farbeffekte zu erzeugen oder eine bestimmte elektrische Leitfähigkeit von Übertragungsschichten einzustellen. Im gesamten sichtbaren Wellenlängenbereich absorbierende Metallteilchen oder Rußpartikel können ebenfalls beigemischt werden, um eine hohe Lichtabsorption zu erhalten. Allerdings ist bei all diesen Pigmenten im Sinne der Erfindung darauf zu achten, daß der mittlere Teilchendurchmesser der Pigmente in der Überzugsschicht kleiner ist als die mittlere Dicke der Überzugsschicht selbst und damit auch kleiner ist als der mittlere Durchmesser der kugelförmigen Bindemittelkomponente.

Außerdem hat die Erfindung noch die vorteilhafte Wirkung, daß die auf das Substrat aufgebrachte Heißsiegelfolie oder die Übertragungsschicht eine ebene, glänzende und optisch ansprechende Oberfläche hat, weil die Schichtdicke der darunterliegenden Heißsiegelschicht konstant ist. Weiterhin ist es vorteilhaft, daß die Klebefugendicke auch nach wiederholter Temperaturerhöhung bis maximal zur T_{g} der kugelförmigen Bindemittelkomponente (2) auch bei saugfähigen Substraten unverändert konstant ist. Somit bleibt die Klebekraft dauerhaft erhalten.

Die Herstellung der erfindungsgemäßen Heißsiegelfolie mit der heißsiegelbaren Überzugsschicht erfolgt vorteilhaft durch Beschichten des Schichtträgers (4) mit einer Lösung der Bindemittelkomponenten (1, 2) in einem organischen Lösungsmittel und nachfolgende Trocknung der Überzugsschicht (1, 2). Die Beschichtung kann grundsätzlich mit jedem an sich bekannten und zur Applikation von Flüssigkeiten geeigneten Verfahren erfolgen, zum Beispiel mittels Extrudergießer, Rasterwalzenauftrag oder Glattwalzenauftrag oder Kombinationen dieser Verfahren. Für eine hohe Beschichtungsleistung sind kontinuierliche Verfahren, wie die exemplarisch genannten, besonders geeignet.

Für Thermotransferfolien, beispielsweise Transfermagnetband, die im wesentlichen aufgebaut sind aus einem flexiblen Schichtträger mit einer oder mehreren Übertragungsschichten und der auf diesen angeordneten Heißsiegelschicht, gilt sinngemäß zum Herstellverfahren das Obige. Es sind lediglich vor der Beschichtung der Heißsiegelschicht eine oder mehrere Beschichtungsvorgänge für die Übertragungsschichten vorzusehen.

Schichtträger, welche zur Herstellung der erfindungsgemäßen Heißsiegelfolien geeignet sind, können grundsätzlich aus jedem flexiblen, bahnförmigen Material bestehen. Besonders geeignet sind Kunststoff-Folien, beispielsweise aus Polyethylenterephthalat, Polyethylennaphthalat, Polypropylensulfid, Polyimidfolien und andere Folien, die gleichfalls eine hohe thermische Stabilität und mechanische Zugfestigkeit besitzen.

Die Herstellung der erfindungsgemäßen, heißsiegelbaren Überzugsschichtzusammensetzung (1, 2) mit einer kugelförmigen Bindemittelkomponente (2) erfolgt auf besonders vorteilhafte Weise bei der Präparation der Beschichtungslösung. Nach der vorliegenden Erfindung wird dazu von dem Effekt der Mischungsunverträglichkeit von Polymeren in geeigneten Lösungsmitteln Gebrauch gemacht, wobei eine mischungsunverträgliche Komponente nach dem Vereinigen der Einzellösungen in Tröpfchenform ausgefällt wird. Damit die resultierende Emulsion stabil bleibt, wird diese stetig gerührt und gemischt und zwar unmittelbar bis zum Beschichtungsvorgang. Hilfreich ist auch der zusätzliche Einsatz eines geeigneten Emulgators.

Es wurde in umfangreichen Versuchen festgestellt, daß die Größe der mischungsunverträglichen, kugelförmigen Tröpfchen durch die Konzentrationen der Einzellösemengen und ihre Mengenanteile wesentlich bestimmt wird. Auch nach dem Beschichten und Trocknen der Bindemittelemulsion waren die Tröpfchen in der Überzugsschicht kugelförmig und in ihrer Größe unverändert noch vorhanden. Je nach Bindemittelsystem, Lösungsmittel und Einzelkonzentrationen sowie Mengenanteilen war es möglich, eine kugelförmige, unverträgliche Bindemittelkomponente in der Überzugsschicht zu erhalten mit einem mittleren Durchmesser von etwa 1 µm bis etwa 10 µm.

Die geschilderte Unverträglichkeit von Bindemittellösungen wurde auch bei den erfindungsrelevanten, amorphen und teilkristallinen Bindemitteln gefunden und das Verfahren wurde so weiterentwickelt, daß gezielt die amorphe Bindemittelkomponente tröpfchenförmig ausgefällt wurde. Mit dieser entsprechenden Emulsion wurden Heißsiegelfolien und Transfermagnetbänder hergestellt.

Grundsätzlich sind aber auch andere Möglichkeiten zur Ausstattung einer heißsiegelbaren Bindemittelschicht mit kugelförmigen, thermoplastischen Polymeren denkbar und sollen durch die geschilderte bevorzugte Möglichkeit nicht ausgeschlossen sein.

Die Größe der kugelförmigen Bindemittelkomponente (2) wurde erfindungsgemäß in der Bindemittellösung auf die geschilderte Weise so eingestellt, daß der mittlere Durchmesser jedenfalls größer war als die mittlere Dicke der fertigen heißsiegelbaren Überzugsschicht (1).

### Beispiel 1

### A) Herstellung der Emulsion

### Lösung 1:

9,60 kg festes Epoxidharz Epikote 1007^{a)} mit T_{g} = 70 °C und Schmelztemperatur Tₘ = 117 °C wurden in einem Lösemittelgemisch aus 11,20 kg Aceton und 11,20 kg Methylethylketon (MEK) vollständig gelöst.

### a): Epikote 1007 ist ein Warenzeichen der Firma Shell.

### Lösung 2:

2,55 kg eines hydroxylgruppenhaltigen, hochkristallinen Polyesterpolyurethans mit T_{g} = 35 °C und Tₘ = 110 °C wurden in einem Lösemittelgemisch von 7,22 kg Aceton und 7,22 kg MEK vollständig gelöst.

### Lösung 3:

2,85 kg eines amorphen Standard-Polystyrol-Granulats mit einer T_{g} = 95 °C und einem weiten kautschukelastischen Bereich von 105 °C bis mindestens 180 °C wurden in einem Lösemittelgemisch von 3,32 kg Aceton und 3,32 kg MEK vollständig gelöst.

### Emulsion:

In ein Rührgefäß von ca. 150 l Inhalt, welches mit einem Schnellrührer versehen ist, wurde ein Gemisch von 20,75 kg Aceton und 20,75 kg MEK eingefüllt. Darauf wurden in der Reihenfolge nacheinander die Lösungen 1, 2 und 3 bei einer Drehzahl der Rührerscheibe von 1300 bis 1350 pro Minute zugegeben. Nach Zugabe der Lösung 3 bildete sich eine Emulsion, welche das Polystyrol in Kugelform mit einem Teilchendurchmesser von ungefähr 4 µm bis 6 µm enthielt.

Die Größe der Polystyrol-Kugeln wurde mittels Abstrichproben gemessen, die mit einem üblichen Abstreifrakel auf Polyethylenterephthalat (PET)-Folie und Naßschichtdicke 33 µm präpariert wurden. Die Beschichtungsemulsion wurde bis zur Beschichtung der Emulsion in der Beschichtungsmaschine beständig weitergerührt.

### B) Herstellung des Transfermagnetbandes und des magnetischen Aufzeichnungsträgers

In einer üblichen Bahnbeschichtungsmaschine zur kontinuierlichen Beschichtung von Folienrollen nach dem Extrusionsverfahren wurde das Transfermagnetband in zwei Passagen hergestellt.

Beim ersten Durchlauf wurde eine Magnetschicht mittels einer Gießerlippe mit einer flüssigen magnetischen Dispersion auf eine 24 um dicke und 600 mm breite PET-Folie beschichtet, darauffolgend in einem Schichttrockner bei ungefähr 80 °C getrocknet und in einem Kalander verfestigt. Beim Beschichten war die Gießerlippe so eingestellt, daß die Dicke der fertigen Magnetschicht ungefähr 8 - 10 um betrug. Die magnetische Dispersion enthielt eine übliche Mischung aus organischem Lösungsmittel THF, einem darin gelösten Bindemittelgemisch aus einem hydroxylgruppenhaltigen Polyurethan, einem Phenoxyharz sowie einem polyfunktionellen Isocyanat als Vernetzungsmittel und schließlich nadelförmiges CrO₂ mit einer geringen Beimischung von Al₂O₃ als unmagnetischen Zusatz.

Im zweiten Durchlauf wurde die heißsiegelbare Überzugsschicht (1, 2) auf die trockene und vemetzte Magnetschicht (3) aufgebracht. Hierzu wurde die bereits beschriebene Emulsion mit den feinverteilten Polystyrol-Kugeln mit dem Gießlineal kontinuierlich beschichtet, nachfolgend bei ungefähr 70 °C getrocknet und in Rollenform aufgewickelt. Die Schichtdicke der Heißsiegelschicht betrug 3,5 µm. Schließlich wurde die Rolle, je nach Anforderung, in Streifen von 8 bis 16 mm Breite aufgetrennt.

Zur Herstellung des magnetischen Aufzeichnungsträgers wurden das Transfermagnetband (1, 2, 3, 4) und eine flexible, nichtmagnetische Kunststoff-Folie (5) aus temperaturbeständigem Polyvinylchlorid (PVC) synchron von je einer Abwickelrolle so abgewickelt und in Kontakt geführt, daß die Heißsiegelschicht die PVC-Folie (5) berührte. Mit Hilfe einer auf 170 °C geheizten, rotierenden Stahlwalze (6), die auf die unbeschichtete Rückseite (4) des Transfermagnetbandes gepreßt wurde, wurde die Magnetschicht auf die Folie übertragen. Im gleichen Arbeitsgang wurde anschließend der Schichtträger (4) des Transferbandes entfernt und der fertige magnetische Aufzeichnungsträger (3, 1, 2, 5) rollenförmig aufgewickelt.

## Patentansprüche

1. Heißsiegelfolie, enthaltend einen flexiblen Schichtträger und eine heißsiegelbare Überzugsschicht aus organischen Polymeren, dadurch gekennzeichnet, daß die Überzugsschicht (1,2) mindestens zwei in organischen Lösungsmitteln mischungsunverträgliche thermoplastische Bindemittelkomponenten enthält, bestehend aus einer amorphen Bindemittelkomponente (2), die kugelförmig ist und in einer diese umgebenden Schicht (1) aus thermoplastischen teilkristallinen Bindemittelkomponenten mit einem Erweichungstemperaturbereich von 20 bis 40°C verteilt ist,. wobei
- die Glasübergangstemperatur T_{g} der kugelförmigen Komponente (2) um mindestens 5 bis maximal 100 °C kleiner ist als die Schmelztemperatur Tₘ der teilkristallinen Bindemittelkomponenten (1), jedoch größer ist als die T_{g} der teilkristallinen Bindemittelkomponenten (1), und wobei
- die kugelförmige Komponente (2) an der freien Oberfläche der Überzugsschicht (1,2) kalottenförmig hervorsteht.

2. Heißsiegelfolie nach Anspruch 1, wobei die T_{g} der kugelförmigen Bindemittelkomponente (2) mindestens 60 °C beträgt.

3. Heißsiegelfolie nach Anspruch 1, wobei die T_{g} der kugelförmigen Bindemittelkomponente (2) um mindestens 10 bis maximal 30 °C kleiner ist als die Tₘ der teilkristallinen Bindemittelkomponenten (1).

4. Heißsiegelfolie nach Anspruch 1, wobei die mittlere Schichtdicke der Überzugsschicht (1) nicht größer ist als der mittlere Durchmesser der kugelförmigen Bindemittelkomponente (2).

5. Heißsiegelfolie nach einem der Ansprüche 1 bis 4, wobei die Überzugsschicht (1) zusätzlich feinverteilte anorganische oder organische Pigmentteilchen enthält.

6. Heißsiegelfolie nach Anspruch 5, wobei der mittlere Teilchendurchmesser der Pigmentteilchen in der Überzugsschicht (1) kleiner ist als der mittlere Durchmesser der Überzugsschicht (1).

7. Heißsiegelfolie nach Anspruch 5, wobei die Pigmente der Überzugsschicht (1) leitfähige Teilchen enthalten.

8. Heißsiegelfolie nach Anspruch 5, wobei die Pigmente der Überzugsschicht (1) Farbstoffteilchen enthalten.

9. Heißsiegelfolie nach Anspruch 5, wobei die Pigmente der Überzugsschicht (1) im gesamten sichtbaren Wellenlängenbereich absorbierende Metallteilchen oder Rußpartikel enthalten.

10. Transfermagnetband, bestehend aus einem flexiblen Schichtträger (4) mit mindestens einer ablösbaren magnetisierbaren Aufzeichnungsschicht (3) und einer Deckschicht (1,2), dadurch gekennzeichnet, daß die Deckschicht (1,2) gebildet wird durch eine heißsiegelbare Überzugsschicht gemäß Anspruch 1.

11. Transfermagnetband nach Anspruch 10, wobei zwischen dem flexiblen Schichtträger (4) und der magnetisierbaren Aufzeichnungsschicht (3) eine Trennschicht aus Polymeren aufgebracht ist.

12. Transfermagnetband nach Anspruch 10, wobei zwischen dem flexiblen Schichtträger (4) und der magnetisierbaren Aufzeichnungsschicht (3) eine Verschleißschutzschicht aufgebracht ist, die harte, anorganische Pigmentteilchen enthält.

13. Magnetischer Aufzeichnungsträger, bestehend aus einem nichtmagnetisierbaren Substrat (5) mit einer Haftklebeschicht (1,2) und mindestens einer darüberliegenden magnetisierbaren Schicht (3), dadurch gekennzeichnet, daß die Haftklebeschicht (1,2) gebildet wird durch eine heißsiegelbare Überzugsschicht gemäß Anspruch 1.

14. Magnetischer Aufzeichnungsträger nach Anspruch 13, wobei das nichtmagnetisierbare Substrat (5) eine saugfähige Oberfläche besitzt.

15. Magnetischer Aufzeichnungsträger nach Anspruch 13, wobei die Haftklebeschicht (1) leitfähige Pigmentteilchen enthält.

16. Magnetischer Aufzeichnungsträger nach Anspruch 13, wobei die Haftklebeschicht (1) Farbpigmente enthält.

## Claims

1. A heat sealing film comprising a flexible layer support and a heat sealable coating layer comprising organic polymers, characterized in that the coating layer (1,2) comprises at least two thermoplastic binder components incompatible for mixing in organic solvents, comprising an amorphous binder component (2) which is spherical and is distributed in a layer (1) which surrounds it and comprises thermoplastic partly crystalline binder components having a softening temperature range of from 20 to 40°C where
- the glass transition temperature T_{g} of the spherical component (2) is from at least 5 to at most 100°C less than the melting point Tₘ of the partly crystalline binder components (1) but greater than the T_{g} of the partly crystalline binder components (1), and where
- the spherical component (2) protudes hemispherically from the free surface of the coating layer (1,2).

2. A heat sealing film as defined in claim 1, where the T_{g} of the spherical binder component (2) is at least 60°C.

3. A heat sealing film as defined in claim 1, where the T_{g} of the spherical binder component (2) is from at least 10 to at most 30°C less than the Tₘ of the partly crystalline binder components (1).

4. A heat sealing film as defined in claim 1, where the mean layer thickness of the coating layer (1) is not greater than the mean diameter of the spherical binder component (2).

5. A heat sealing film as defined in any of claims 1 to 4, where the coating layer (1) additionally comprises finely distributed inorganic or organic pigment particles.

6. A heat sealing film as defined in claim 5, where the mean diameter of the pigment particles in the coating layer (1) is less than the mean diameter of the coating layer (1).

7. A heat sealing film as defined in claim 5, where the pigments of the coating layer (1) comprise conductive particles.

8. A heat sealing film as defined in claim 5, where the pigments of the coating layer (1) comprise dye particles.

9. A heat sealing film as defined in claim 5, where the pigments of the coating layer (1) comprise metal particles or carbon black particles which absorb in the total visible wavelength region.

10. A magnetic transfer strip comprising a flexible layer support (4) with at least one detachable magnetizable recording layer (3) and a cover layer (1,2), characterized in that the cover layer (1,2) is formed by a heat sealable coating layer as set forth in claim 1.

11. A magnetic transfer strip as defined in claim 10, where a release layer comprising polymers is applied between the flexible layer support (4) and the magnetizable recording layer (3).

12. A magnetic transfer strip as defined in claim 10, where an antiwear layer comprising hard, inorganic pigment particles is applied between the flexible layer support (4) and the magnetizable recording layer (3).

13. A magnetic recording medium comprising a nonmagnetizable substrate (5) with an adhesion layer (1,2) and at least one magnetizable layer (3) lying above it, characterized in that the adhesion layer (1,2) is formed by a heat sealable coating layer as set forth in claim 1.

14. A magnetic recording medium as defined in claim 13, where the nonmagnetizable substrate (5) has an absorbent surface.

15. A magnetic recording medium as defined in claim 13, where the adhesion layer (1) comprises conductive pigment particles.

16. A magnetic recording medium as defined in claim 13, where the adhesion layer (1) comprises color pigments.

## Revendications

1. Film thermoscellable comprenant un support de couche flexible et une couche de revêtement thermoscellable en polymères organiques, caractérisé en ce que la couche de revêtement (1,2) comprend au moins deux composants liants thermoplastiques incompatibles en mélange dans des solvants organiques, constitués d'un composant liant (2) amorphe qui est sphérique et est réparti dans une couche (1) qui l'entoure et comprend des composants liants thermoplastiques partiellement cristallins ayant une gamme de température de ramollissement de 20 à 40°C,
- la température de transition vitreuse Tᵥ du composant sphérique (2) étant d'au moins 5 à au plus 100°C inférieure au point de fusion T_{f} des composants liants partiellement cristallins (1) mais supérieure à la Tᵥ des composants liants partiellement cristallins (1), et
- le composant sphérique (2) étant en saillie en forme d'hémisphère de la surface libre de la couche de revêtement (1,2).

2. Film thermoscellable selon la revendication 1, dans lequel la Tᵥ du composant liant sphérique (2) est d'au moins 60°C.

3. Film thermoscellable selon la revendication 1, dans lequel la Tᵥ du composant liant sphérique (2) est d'au moins 10 à au plus 30°C inférieure au point de fusion T_{f} des composants liants partiellement cristallins (1).

4. Film thermoscellable selon la revendication 1, dans lequel l'épaisseur de couche moyenne de la couche de revêtement (1) n'est pas supérieure au diamètre moyen du composant liant sphérique (2).

5. Film thermoscellable selon l'une quelconque des revendications 1 à 4, dans lequel la couche de revêtement (1) comprend en outre des particules de pigments inorganiques ou organiques finement divisées.

6. Film thermoscellable selon la revendication 5, dans lequel le diamètre moyen de particule des particules de pigments dans la couche de revêtement (1) est inférieur au diamètre moyen de la couche de revêtement (1).

7. Film thermoscellable selon la revendication 5, dans lequel les pigments de la couche de revêtement (1) comprennent des particules conductrices.

8. Film thermoscellable selon la revendication 5, dans lequel les pigments de la couche de revêtement (1) comprennent des particules colorantes.

9. Film thermoscellable selon la revendication 5, dans lequel les pigments de la couche de revêtement (1) comprennent des particules métalliques ou des particules de noir de carbone qui absorbent dans la totalité du domaine des longueurs d'onde visibles.

10. Bande magnétique de transfert constituée d'un support de couche flexible (4) avec au moins une couche d'enregistrement magnétisable détachable (3) et une couche de recouvrement (1,2), caractérisée en ce que la couche de recouvrement (1,2) est formée d'une couche de revêtement thermoscellable selon la revendication 1.

11. Bande magnétique de transfert selon la revendication 10, dans laquelle une couche antiadhésive à base de polymères est appliquée entre le support de couche flexible (4) et la couche d'enregistrement magnétisable (3).

12. Bande magnétique de transfert selon la revendication 10, dans laquelle une couche anti-usure comprenant des particules de pigments inorganiques dures est appliquée entre le support de couche flexible (4) et la couche d'enregistrement magnétisable (3).

13. Support d'enregistrement magnétique constitué d'un substrat non magnétisable (5) avec une couche adhésive (1,2) et au moins une couche magnétisable (3) pardessus, caractérisé en ce que la couche adhésive (1,2) est formée d'une couche de revêtement thermoscellable selon la revendication 1.

14. Support d'enregistrement magnétique selon la revendication 13, dans lequel le substrat non magnétisable (5) présente une surface absorbante.

15. Support d'enregistrement magnétique selon la revendication 13, dans lequel la couche adhésive (1) comprend des particules de pigments conductrices.

16. Support d'enregistrement magnétique selon la revendication 13, dans lequel la couche adhésive (1) comprend des pigments colorants.
